# EUROPÄISCHE PATENTSCHRIFT

(11) **EP 0 636 190 B1**
(45) Veröffentlichungstag und Bekanntmachung des Hinweises auf die Patenterteilung: **08.10.1997**
(21) Anmeldenummer: 94906878.7
(22) Anmeldetag: 16.02.1994
(51) Int. Cl.: D01D 1/06

(54) **SPINNANLAGE FÜR THERMOPLASTISCHE FÄDEN**
THERMOPLASTIC THREAD SPINNING INSTALLATION
INSTALLATION DE FILAGE DE FILS THERMOPLASTIQUES

(30) Priorität: 18.02.1993 DE 4304917; 06.03.1993 DE 4307076
(43) Veröffentlichungstag der Anmeldung: 01.02.1995
(73) Patentinhaber: B a r m a g AG, D-42897 Remscheid (DE)
(72) Erfinder: LENK, Erich, D-42897 Remscheid (DE); GATHMANN, Egon, D-42897 Remscheid (DE)
(74) Vertreter: Kahlhöfer, Hermann, Dipl.-Phys.
(86) Internationale Anmeldenummer: DE9400167
(87) Internationale Veröffentlichungsnummer: WO9419516

(56) Entgegenhaltungen:
- CH-A- 348 772
- DE-B- 1 557 063
- FR-A- 1 160 385
- GB-A- 870 019
- GB-A- 893 059
- GB-A- 926 799

## Beschreibung

Die Erfindung betrifft eine Spinnanlage für thermoplastische Fäden sowie eine Mehrfach-Zahnradpumpe mit mehreren Zahnradpaarungen. Eine derartige Spinnanlage und Mehrfach-Zahnradpumpe ist durch U.S.A. 3,502,033 (Bag. 637) sowie DE 19 08 207 A (Bag. 664) bekannt. Beim Spinnen von thermoplastischen Fäden, die aus einzelnen Filamenten bestehen, wird das thermoplastische Material - z. B. Polyäthylenterephthalat, Nylon 6, Nylon 6.6 - durch einen Extruder aufgeschmolzen, gemischt und sodann unter hohem Druck vom Hauptstrom ausgepreßt. Dieser Hauptstrom wird sodann in mehrere Teilströme aufgeteilt. Jeder Teilstrom wird zu einer Spinndüse geführt, aus der jeweils eine Vielzahl von Filamenten ausgesponnen wird. Bündel von Filamenten werden sodann zu Fäden zusammengefasst.

Für die Qualität des Produktes ist es von ausschlaggebender Bedeutung, daß die Filamente untereinander gleiche Eigenschaften haben. Aus diesem Grunde ist die Temperaturführung in der Schmelzeleitung, welche den Hauptstrom führt und in dem sog. Spinnkopf, in dem der Hauptstrom in Teilströme aufgeteilt und die Teilströme zu den Spinndüsen geführt werden, von ganz besonderer Bedeutung. Von ebenso großer Bedeutung ist die gleichmäßige Förderung sämtlicher Teilströme. Aus diesem Grunde ist üblicherweise in dem Spinnkopf eine Mehrfach-Pumpe enthalten. Diese Mehrfach-Pumpe wird einerseits mit dem Hauptstrom beschickt. In der Pumpe erfolgt die Aufteilung des Hauptstromes in Teilströme. Die Mehrfach-Pumpe besitzt mehrere Teil-Pumpen, die dem Zwecke dienen, jeweils einen Teilstrom mit gleichbleibendem und von Teil-Pumpe zu Teil-Pumpe gleichem Druck und gleicher Fördermenge zu den Spinndüsen zu pumpen. Es ist daher üblich, daß diese Verteilerpumpen durch eine gemeinsame Antriebswelle für alle Teil-Pumpen angetrieben werden. Bekannt und üblich wegen der Konstanz der Fördermenge und des Förderdruckes ist ferner die Verwendung von Zahnradpumpen.

Trotz aller Bemühungen bei der Temperaturführung und der Dosierung von Hauptstrom und Teilströmen werden immer wieder unterschiede zwischen den einzelnen Filamenten festgestellt.

Es sind zwar immer wieder Versuche bekannt geworden, die Temperaturführung des Hauptstromes durch Mischen zu vergleichmäßigen. Diesem Zweck dient der Mischer nach DE 12 36 479 B. Es sind auch viele Ausführungen von Mischern bekannt, die an dem Extruder angebracht oder als selbständige Mischer in den Schmelzestrom eingebaut werden (DE 20 30 756 C; U.S.A. 4,253,771; DE 20 40 919 A). Eine Beseitigung der beim Spinnen von multifilen thermoplastischen Fäden besonders schwerwiegenden Probleme der Gleichmäßigkeit der Viskositäts- und Temperaturführung konnte durch diese Maßnahmen jedoch nicht beseitigt werden, ebenso nicht durch den vor der Düsenplatte angeordneten Mischer nach DE 16 60 674 A.

Durch die DE-B-1 557 063 ist ein kontinuierlicher Laminarmischer für Viskose, insbesondere Hochviskosemedien, mit beweglichen, angetriebenen Mischelementen bekannt. Ein Schmelzstrom eines Viskosemediums wird durch mehrere jeweils durch ein Mischglied getrennte Mischkammern geführt. Das Mischglied weist eine gemeinsam mit ihm bewegliche Durchtrittsöffnung auf, deren Querschnitt kleiner ist als der lichte Querschnitt der angrenzenden Kammer. Hierdurch wird erreicht, daß ein Schmelzstrom nur dann durch Löcher der gelochten Wand fließt, wenn sich diese gerade mit einem zugeordneten Durchflußkanal des Mischelementes überdecken. Durch eine Relativbewegung des Mischelementes zur gelochten Wand wird aber bewirkt, daß das Medium jeweils in Portionen örtlich und zeitlich durch die gelochte Wand und das Mischelement hindurchtritt.

Durch die GB-A-870 019 ist eine Verteilereinrichtung bekannt, durch die ein Hauptstrom eines Mediums in mehrere Teilströme unterteilt wird. Die Verteilereinrichtung ist über eine Hauptleitung mit einem Reservoir verbunden. Zwischen der Verteilereinrichtung und dem Reservoir ist in der Hauptleitung eine Pumpe angeordnet, die das Medium aus dem Reservoir zu der Verteilereinrichtung fördert. Die Verteilereinrichtung umfaßt mehrere Radsätze zur Verteilung des Mediums.

Die GB-A-893 059 beschreibt eine Spinnanlage für thermoplastische Fäden. Die Spinnanlage umfaßt unter anderem eine Zahnradpumpe. Die Zahnradpumpe weist am Ausgang ein zusätzliches Zahnrad auf, das durch ein Zahnrad der Zahnradpumpe angetrieben wird. Das zusätzliche Zahnrad ist auf einer Hohlwelle angeordnet. Durch im Zahnrad ausgebildete Kanäle strömt ein Medium in die Hohlwelle hinein. In der Hohlwelle selbst ist ein Mischelement vorgesehen. Eine Mischstufe, die durch das Mischelement und die Hohlwelle gebildet ist, ist der Zahnradpumpe vorgeschaltet.

Die Aufgabe dieser Erfindung besteht darin, derartige Temperatur- und Viskositätsunterschiede zu beseitigen.

Die Lösung ergibt sich aus Anspruch 1 sowie der Gestaltung der Verteilerpumpe nach Anspruch 6.

Im folgenden wird ein Ausführungsbeispiel der Erfindung anhand der Figuren 1 bis 3 beschrieben.

Es zeigen:
- Fig. 1: einen Schnitt durch eine Mehrfachpumpe in mehreren Axialebenen;
- Fig. 2: die schematische Draufsicht;
- Fig. 3: die schematische Ansicht einer Spinnanlage.
Zur Ausführung der Erfindung finden vorzugsweise Zahnradpumpen Verwendung. Die dargestellte Zahnradpumpe weist ein Sonnenrad 1 auf. Das Sonnenrad 1 wird durch eine gemeinsame Antriebswelle 2 angetrieben. Die Antriebsseite ist durch eine Keilnut 3 kenntlich. Das Sonnenrad 1 kämmt mit drei Planetenrädern 4, 5, 6. Die Planetenräder sind auf dem Umfang jeweils mit 120° versetzt. Die Planetenräder sind frei drehbar auf den Zapfen 7 gelagert. Es ergeben sich hierdurch drei Zahnradpaarungen mit jeweils dem Sonnenrad 1 und einem Planetenrad. Jede dieser Zahnradpaarungen bildet eine Teilpumpe.

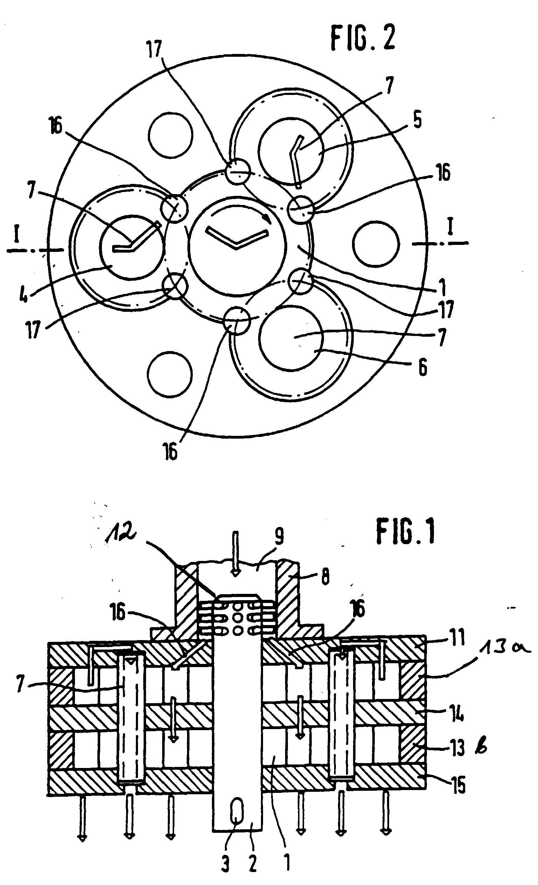

In Fig. 1 ist eine sog."6-fach-Pumpe" dargestellt. Durch die gemeinsame Antriebswelle 2 wird nämlich noch ein zweiter Satz von Zahnrädern, ebenfalls bestehend aus Sonnenrad 1 sowie den Planetenrädern 4, 5 und 6 angetrieben. Der Klarheit wegen sei bemerkt, daß entsprechende Räder der beiden Zahnradsätze gleichachsig gelagert sind. Die beiden Radsätze werden durch die Gehäuseplatten 13a und 13b geführt. Diese Gehäuseplatten 13a und 13b weisen Ausschneidungen auf, in denen jeweils das Sonnenrad und die Planetenräder liegen. Die beiden Radsätze sind durch die Zwischenplatte 14 voneinander getrennt. Die Pumpensätze werden an ihren jeweils anderen Stirnseiten durch die Deckelplatten 11 und 15 verschlossen.

Der von dem Extruder durch die Schmelzeleitung 8 herangeführte Hauptstrom der thermoplastischen Schmelze gelangt zunächst in eine Einlaßkammer (im Rahmen dieser Anmeldung auch Mischkammer und Verteilerkammer genannt) 9. Die Einlaßkammer liegt fluchtend mit einer der Pumpenwellen in oder vor einer der Deckelplatten 11 oder 15. Bei diesen Pumpenwellen kann es sich um die Wellen 7 handeln, auf denen in diesem Fall die Ritzel (Planetenräder 4,5,6) drehfest angeordnet sind und die in dem Gehäuse drehbar gelagert sind. In dem gezeigten Ausführungsbeispiel handelt es sich jedoch um die Antriebswelle 2. Hierzu ist die Antriebswelle über die Gehäusebreite zwischen den Deckelplatten 11 und 15 hinaus verlängert. Die Antriebswelle 2 ist im Unterschied zu bisher bekannten Pumpenausführungen durch das gesamte Gehäuse hindurchgeführt und ragt mit ihrem, von der Antriebsseite abgewandten Ende, in die Einlaßkammer 9. Die Einlaßkammer 9 mündet also zentrisch vor dem Gehäusedeckel 11. Das in die Einlaßkammer 9 ragende Ende der Antriebswelle wird in dieser Anmeldung als Mischende oder Mischerwelle 12 bezeichnet. Die Einlaßkammer/Mischkammer 9 kann in der Deckelplatte 11 liegen und insofern Bestandteil der Pumpe selbst sein. In dem Ausführungsbeispiel nach Figur 1 ist gezeigt, daß die Einlaßkammer/Mischkammer 9 Teil des Schmelzezufuhrkanals 8 ist, der z.B. in dem Pumpenblock liegt, an den die Pumpe angeflanscht ist.

Von der Mischkammer 9 gehen Teilkanäle 16 aus. Diese Teilkanäle 16 sind in der Deckelplatte 11 jeweils zu dem Einlaßkanal 16 einer jeden Zahnradpaarung geführt. Die Einlaßkanäle des vorderen Zahnradsatzes, welcher der Deckelplatte 11 benachbart ist, durchdringen fluchtend auch die Zwischenplatte 14 und gelangen sodann zu den jeweiligen Einlässen des zweiten Zahnradsatzes. Von jeder Zahnradpaarung des Sonnenrades 1 mit einem der Planetenräder 4 geht auch ein Auslaßkanal 17 aus. Die Auslaßkanäle des vorderen Zahnradsatzes, der der Deckelplatte 11 benachbart ist, verläßt diesen Zahnradsatz über die Wellen 7 der Planetenräder 4 bzw. 5 bzw. 6. Die Auslaßkanäle 17 des zweiten Zahnradsatzes durchdringen unmittelbar die Deckelplatte 15. Die genaue räumliche Lage der Einlaß- und Auslaßkanäle ist aus den Figuren nicht ersichtlich, sie ist jedoch aus dem Stand der Technik bekannt und hier nicht weiter dargestellt, da sie nicht Gegenstand der Erfindung ist. Insbesondere kann man die Auslässe auch auf die Einlaßseite legen. Es soll hier lediglich gezeigt werden, daß die Erfindung auf Mehrfachpumpen beliebiger Bauart und insbesondere Zahnradpumpen beliebiger Bauart anzuwenden ist, sofern die Voraussetzung erfüllt ist, daß die Mehrfach-Pumpe durch eine gemeinsame Antriebswelle angetrieben wird. Die Mischwelle 12 bzw. der Mischbereich 12 der Antriebswelle 2 kann auch auf der Antriebsseite liegen. Dies kann aus einbautechnischen Gründen zweckmäßig sein, es hat jedoch den Nachteil, daß weitere Dichtungen erforderlich sind. Die Ausführung nach dem gezeigten Ausführungsbeispiel hat demgegenüber den Vorteil, daß die Zuführung des Hauptstromes nicht durch die technischen Gegebenheiten des Antriebes behindert wird. Daher ist die Funktion der Einlaßkammer, gleichzeitig als Mischkammer und Verteilerkammer zu dienen, hier gut zu verwirklichen.

Das Mischende 12 der Antriebswelle 2 ist mit geeigneten Mischelementen besetzt. In dem Ausführungsbeispiel ist gezeigt, daß von der Antriebswelle und von den zylindrischen Wandungen der Mischkammer Stifte radial abstehen. Diese Stifte sind in abwechselnden Normalebenen angeordnet. Diese Stifte, die relativ zueinander aneinander "vorbeiwandern", bewirken eine gute Durchmischung des unter Druck die Mischkammer durchströmenden Hauptstromes, bevor er in Teilströme aufgeteilt wird. Auch andere Mischelemente an dem Mischabschnitt 12 der Antriebswelle 12 und/oder den Wandungen der Mischkammer sind denkbar und im Stand der Technik beschrieben.

Durch die Benutzung der Antriebswelle als Mischwelle und durch die intensive Durchmischung des Hauptstromes unmittelbar vor seiner Aufteilung in Teilströme wird bewirkt, daß sämtliche Querschnittsbereiche des Hauptstromes miteinander vermischt werden. Es wird ausgeschlossen, daß evtl. Viskositäts- und Temperaturgradienten zwischen den einzelnen Querschnittsbereichen sich bei der Aufteilung in Teilströme wieder bemerkbar machen. Man erreicht hierdurch, daß sämtliche Teilströme nicht nur in sich sondern auch untereinander homogen sind und eine gleichmäßige Temperatur und Viskosität haben.

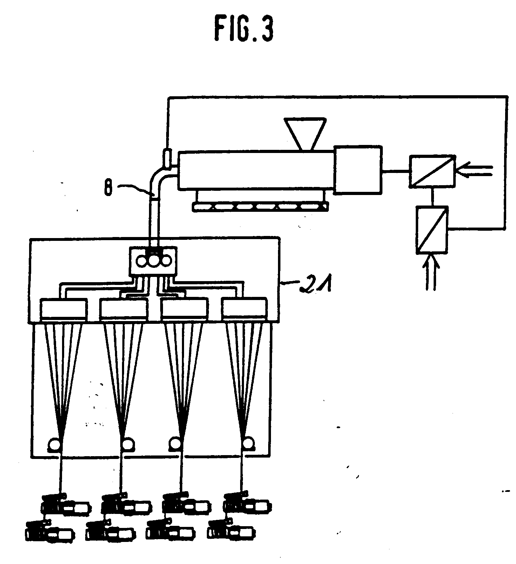

In Fig. 3 ist eine Spinnanlage dargestellt. Die Spinnanlage besteht aus dem Extruder, in dem ein thermoplastisches Material aufgeschmolzen und unter Druck in die Schmelzeleitung gefördert wird. Die Schmelzeleitung führt in den Spinnkopf. In dem Spinnkopf wird die Schmelze an die Mehrfach-Pumpe nach dieser Erfindung angeschlossen. In dem Spinnkopf wird der Hauptstrom durch die Mehrfach-Pumpe in Teilströme aufgeteilt. Jeder Teilstrom wird sodann einer Spinndüse zugeführt. Aus der Spinndüse wird eine Vielzahl von Multifilamentfäden ersponnen. Jeder Faden wird durch eine Galette abgezogen und dann verarbeitet und/oder aufgewickelt.

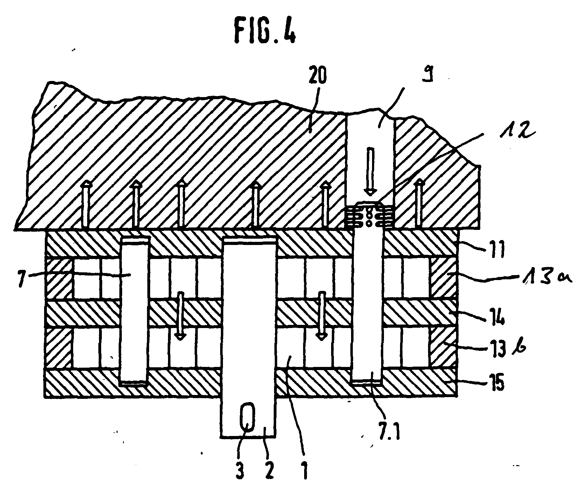

Figur 4 zeigt eine Mehrfachpumpe, die mit den folgenden Abweichungen dem Ausführungsbeispiel nach Figur 1,2 entspricht. Von den Abweichungen abgesehen, wird auf die Beschreibung von dem Ausführungsbeispiel nach Figur 1,2 Bezug genommen. Die Antriebswelle endet im Gehäusedeckel 11 in einem Sackloch. Die Pumpe ist an einem Pumpenblock 20 angeflanscht. Der Pumpenblock mit der angeflanschten Pumpe liegt in dem Spinnkasten 21 nach Figur 3. Die sogenannten Planetenräder sind auf ihren jeweiligen Wellen 7 drehfest gelagert. Die Wellen 7 hinwiederum sind in den Gehäuseplatten 11, 14, 15 drehbar gelagert. Die Welle 7.1 ist aus dem Gehäuse und zwar der Deckelplatte 11 herausgeführt und ragt in den Einlaßkanal 16. Der letzte Abschnitt des Einlaßkanals 16 bildet die Mischkammer, die in diesem Falle ausschließlich in dem Pumpenblock liegt. Die Umfangswandung der Mischkammer und/oder die Welle 7.1 ist mit Mischelementen bekannter Bauart - hier Stiften - besetzt. Von der Mischkammer 16 aus zweigen die Teilkanäle ab, die sodann zum Einlaß der jeweiligen Pumpenpaarung führt. Die Auslaßkanäle sind in diesem Fall sämtlichst auf der Flanschseite der Pumpe angeordnet und werden durch den Pumpenblock abgeführt zu den einzelnen in Figur 3 dargestellten Spinndüsen.

## Patentansprüche

1. Spinnanlage für thermoplastische Fäden,
1.1. mit einer Schmelzeleitung (8),
in der der Hauptstrom der Schmelze zugeführt wird,
1.2. mit einer Verteilerpumpe,
die an der Schmelzeleitung (8) angeschlossen ist, und
in der der Hauptstrom in mehrere Teilströme aufgeteilt wird;
die aus mehreren Teil-Pumpen besteht,
denen jeweil ein Teilstrom zugeführt und
die durch eine gemeinsame Antriebswelle (2) angetrieben werden;
1.3. mit jeweils einer Spinndüse,
der zum Spinnen jeweils eines Filamentbündels jeweils ein durch eine der Teil-Pumpen geförderter Teilstrom zugeführt wird,
dadurch gekennzeichnet, daß
1.4 der Hauptstrom vor der Verteilerpumpe in einen Mischkanal (9) geführt wird und von dort aus auf die einzelnen Teilströme aufgeteilt wird, wobei jeder Teilstrom einer der Teilpumpen zugeführt wird;
1.5 daß der Mischkanal (9) fluchtend mit einer der getriebenen Wellen (2) der Pumpe angeordnet ist und daß die Welle (2) in dem Mischkanal (9) ragt;
1.6 daß die Welle (2) im Bereich des Mischkanals (9) und/oder das Gehäuse des Mischkanals mit Mischlementen versehen ist/sind.

2. Spinnanlage nach Anspruch 1,
dadurch gekennzeichnet, daß
die in den Mischkanal (9) hineinragende Welle die Antriebswelle (2) ist.

3. Spinnanlage nach Anspruch 2,
dadurch gekennzeichnet, daß
der Mischkanal (9) auf der Seite des Pumpengehäuses an-geordnet ist, die von der Antriebsseite abgewandt ist und daß die Antriebswelle (2) mit ihrem von der Antriebsseite abgewandten Ende in den Mischkanal (9) ragt.

4. Spinnanlage nach einem der vorangegangenen Ansprüche,
dadurch gekennzeichnet, daß
der Mischkanal (9) in dem Gehäusedeckel (11) liegt.

5. Spinnanlage nach einem der vorangegangenen Ansprüche,
dadurch gekennzeichnet, daß
der Mischkanal (9) an das Pumpengehäuse angeflanscht ist, vorzugsweise, daß die Verteilerpumpe an einen Pumpenblock (20) angeflanscht ist, in dem die Schmelzeleitung (8) und die Teilstrom-Leitungen geführt sind und daß der Mischkanal (9) zumindest teilweise in dem Pumpenblock (20) angelegt ist.

6. Mehrfach-Zahnradpumpe mit mehreren Zahnradpaarungen, die durch eine gemeinsame Antriebswelle (2) angetrieben werden und jeweils eine Teilpumpe bilden,
mit einer Einlaßkammer (9) für einen Hauptstrom,
mit Teilkanälen (16), die von der Einlaßkammer (9) abzweigen und von denen jeweis einer zum Einlaß einer Zahnradpaarung führt, so daß der Hauptstrom in mehrere Teilströme aufgeteilt wird,
dadurch gekennzeichnet, daß
eine der Wellen (2) mit ihrem Ende in die Einlaßkammer (9) hineinragt und daß die Einlaßkammer (9) als Mischkammer und die Welle als Mischwelle (12) ausgebildet sind.

7. Zahnradpumpe nach Anspruch 6,
dadurch gekennzeichnet, daß
die Mischwelle die Antriebswelle (2) ist.

## Claims

1. Spinning unit for thermoplastic yarns, comprising:
1.1 a melt line (8), in which the main flow of the melt is transported,
1.2 a distributor pump, which is connected to the melt line (8) and in which the main flow is divided into several partial flows, the distributor pump consisting of several sub-pumps to each of which is delivered a partial flow and which are driven by a common drive shaft (2),
1.3 each sub-pump comprising a spinning nozzle, each of which receives a partial flow, delivered by one of the sub-pumps, for the purpose of spinning one filament bundle in each case,
characterized in that
1.4 before the distributor pump, the main flow is guided into a mixing channel (9) and from there is distributed to the individual partial flows, each partial flow being supplied to one of the sub-pumps,
1.5 the mixing channel (9) is disposed in alignment with one of the driven shafts (2) of the pump and the shaft (2) extends within the mixing channel (9), and
1.6 the shaft (2) in the region of the mixing channel (9) and/or the housing of the mixing channel is/are provided with mixing elements.

2. Spinning unit according to Claim 1,
characterized in that
the shaft extending into the mixing channel (9) is the drive shaft (2).

3. Spinning unit according to Claim 2,
characterized in that
the mixing channel (9) is disposed on the side of the pump housing which faces away from the drive side, and that the end of the drive shaft (2) which faces away from the drive side extends into the mixing channel (9).

4. Spinning unit according to one of the preceding Claims,
characterized in that
the mixing channel (9) is located in the housing cover (11).

5. Spinning unit according to one of the preceding claims,
characterized in that
the mixing channel (9) is flanged to the pump housing, preferably, that the distributor pump is flanged to a pump block (20) within which the melt line (8) and the partial flow lines are guided, and that the mixing channel (9) extends, at least in part, within the pump block (20).

6. Multiple gear pump with several sets of paired gears, which are driven by a common drive shaft (2) and each form a sub-pump,
with an inlet chamber (9) for a main flow,
with sub-channels (16) which branch off from the inlet chamber (9) and each of which leads to the inlet of one set of paired gears, so that the main flow is divided into several partial flows,
characterized in that
the end of one of the shafts (2) extends into the inlet chamber (9) and that the inlet chamber (9) is designed as a mixing chamber and the shaft as a mixing shaft (12).

7. Gear pump according to Claim 6,
characterized in that
the mixing shaft is the drive shaft (2).

## Revendications

1. Installation de filature pour fils thermoplastiques, comportant
1.1. une conduite (8) de matière fondue,
dans laquelle est amené le flux principal de matière fondue,
1.2. une pompe de distribution,
qui est raccordée à la conduite (8) de matière fondue et dans laquelle le flux principal est réparti en plusieurs flux partiels ;
qui est constituée de plusieurs pompes partielles auxquelles est amené un flux partiel respectif, et qui sont entraînées par un arbre d'entraînement (2) commun ;
1.3. une filière respective,
à laquelle est amené un flux partiel acheminé par l'une des pompes partielles pour filer à chaque fois un faisceau de filaments,
caractérisée en ce que,
1.4. le flux principal passe en amont de la pompe de distribution dans un canal de mélange (9), et en ce que, de là, il est réparti sur les différents flux partiels, chaque flux partiel étant amené à l'une des pompes partielles ;
1.5. le canal de mélange (9) est disposé dans l'alignement de l'un des arbres entraînés (2) de la pompe, et en ce que l'arbre (2) pénètre dans le canal de mélange (9) ;
1.6. l'arbre (2) et/ou le carter du canal de mélange est/sont muni(s) d'éléments mélangeurs au niveau du canal de mélange (9).

2. Installation de filature selon la revendication 1,
caractérisée en ce que,
l'arbre pénétrant dans le canal de mélange (9) est l'arbre d'entraînement (2).

3. Installation de filature selon la revendication 2,
caractérisée en ce que,
le canal de mélange (9) est disposé du côté du corps de la pompe opposé au côté de l'entraînement, et en ce que l'arbre d'entraînement (2) pénètre dans le canal de mélange (9) par son extrémité opposée au côté de l'entraînement.

4. Installation de filature selon l'une quelconque des revendications précédentes,
caractérisée en ce que,
le canal de mélange (9) est situé dans le couvercle (11) du carter.

5. Installation de filature selon l'une quelconque des revendications précédentes,
caractérisée en ce que,
le canal de mélange (9) est bridé sur le corps de la pompe, en ce que la pompe de distribution est de préférence bridée sur un bloc (20) de pompes dans lequel passe la conduite (8) de matière fondue et les conduites de flux partiels, et en ce que le canal de mélange (9) est mis en appui, au moins partiellement, dans le bloc (20) de pompe.

6. Pompe à engrenages multiples avec plusieurs couples d'engrenages, qui sont entraînés par un arbre d'entraînement (2) commun et forment chacun une pompe partielle, comportant
une chambre d'admission (9) destinée à un flux principal,
des canaux partiels (16) qui partent de la chambre d'admission (9), chacun d'entre eux conduisant à l'entrée d'un couple d'engrenages, de sorte que le flux principal soit réparti en plusieurs flux partiels,
caractérisée en ce que,
l'un des arbres (2) pénètre par son extrémité dans la chambre d'admission (9), et en ce que la chambre d'admission (9) est agencée en tant que chambre de mélange et l'arbre en tant qu'arbre de mélange (12).

7. Pompe à engrenages selon la revendication 6,
caractérisée en ce que,
l'arbre de mélange est l'arbre d'entraînement (2).
